# EUROPÄISCHE PATENTSCHRIFT

(11) **EP 2 900 945 B1**
(45) Veröffentlichungstag und Bekanntmachung des Hinweises auf die Patenterteilung: **24.02.2021**
(21) Anmeldenummer: 13771486.1
(22) Anmeldetag: 02.10.2013
(51) Int. Cl.: F01K 23/10, F22B 1/18, F22B 35/08, F22B 35/10

(54) **VERFAHREN ZUM FLEXIBLEN BETRIEB EINER KRAFTWERKSANLAGE**
METHOD FOR FLEXIBLY OPERATING A NUCLEAR POWER PLANT
PROCÉDÉ DE FONCTIONNEMENT FLEXIBLE D'UNE CENTRALE ÉLECTRIQUE

(30) Priorität: 11.10.2012 DE 102012218542
(43) Veröffentlichungstag der Anmeldung: 05.08.2015
(73) Patentinhaber: Siemens Energy Global GmbH & Co. KG, 81739 München (DE)
(72) Erfinder: BRÜCKNER, Jan, 91080 Uttenreuth (DE); SCHLUND, Gerhard, 91077 Dormitz (DE); THOMAS, Frank, 91056 Erlangen (DE); WEISSENBERGER, Bernd, 91056 Erlangen (DE)
(86) Internationale Anmeldenummer: PCT/EP2013/070510
(87) Internationale Veröffentlichungsnummer: WO 2014/056772

(56) Entgegenhaltungen:
- EP-A1- 1 050 667
- EP-A2- 1 164 254
- WO-A1-02/101205
- WO-A2-2009/150055
- JP-A- H0 783 005
- US-A- 3 192 908

## Beschreibung

Die Erfindung betrifft ein Verfahren zum flexiblen Betrieb einer Kraftwerksanlage mit einem nach dem Zwangsdurchlaufprinzip arbeitenden Abhitzedampferzeuger.

Von modernen Kraftwerksanlagen werden nicht nur hohe Wirkungsgrade sondern auch eine möglichst flexible Betriebsweise gefordert. Hierzu gehören außer kurzen Anfahrzeiten und hohen Laständerungsgeschwindigkeiten beispielsweise auch die Möglichkeit, Frequenzstörungen im Netz auszugleichen. Je nach Anforderungsprofil einzelner Netze unterschiedlicher Länder und der dazugehörigen Vergütungsmodelle kann es daher insbesondere bei kombinierten Gas- und Dampfkraftwerksanlagen sinnvoll sein, im Spitzenlastbereich über eine Zusatzfeuerung dem Netz möglichst zügig zusätzliche Leistung über den Wasser-Dampf-Kreislauf zur Verfügung zu stellen. Solche Gas- und Dampfkraftwerksanlagen mit Zusatzfeuerung sind beispielsweise aus der DE 10 2010 060 064 A1, der EP 1 050 667 A1 und der US 3,980,100 bekannt.

In heute bekannten Kraftwerksanlagen mit Zusatzfeuerung kommen in aller Regel Trommelkessel zum Einsatz. Hier steigt nach Aktivierung der Zusatzfeuerung die im Verdampfer produzierte Dampfmenge erst mit einer merklichen Zeitverzögerung an. Somit verbessert sich die Dampfkühlung betroffener Heizflächenrohre, die unmittelbar an das transiente Verhalten der Dampfproduktion gekoppelt ist auch nur zeitverzögert. Konkret bedeutet dies, dass unmittelbar bei Einschalten der Zusatzfeuerung Überhitzer- und Zwischenüberhitzerheizflächen die steigende Beheizung auf der Rauchgasseite, zuerst mit nahezu identischem Dampfmassenstrom, verkraften müssen. Im Umkehrschluss bedeutet dies aber auch, dass nur durch eine Begrenzung der Leistungssteigerung des Zusatzfeuers die Fluid- und somit auch die Wandtemperaturen dieser Heizflächen in zulässigen Grenzen gehalten werden können. Eine derartige Anforderung schränkt allerdings die Anlagenflexibilität erheblich ein.

Aufgabe der Erfindung ist es, ein Verfahren bereitzustellen, das die zuvor beschriebenen Nachteile überwindet.

Diese Aufgabe wird mit dem Verfahren zum flexiblen Betrieb einer Kraftwerksanlage mit den Merkmalen des Anspruchs 1 gelöst.

Durch den Einsatz einer Zusatzfeuerung, die insbesondere im Überhitzer-/Zwischenüberhitzerbereich des Rauchgaskanals des Abhitzedampferzeugers angeordnet ist, nimmt die an den Wasser-Dampf-Kreislauf übertragene Wärmeleistung zu, wodurch die erzeugte Dampfmenge und in letzter Konsequenz auch die über die Dampfturbine entbundene mechanische Leistung steigt. Dabei ist allerdings zu berücksichtigen, dass sich im Rauchgaskanal in der Umgebung der zugeschalteten Zusatzfeuerung die Rauchgastemperaturen signifikant erhöhen. Gerade die in Rauchgasrichtung stromabwärts der Zusatzfeuerung zuerst gelegene Heizflächen (in der Regel sind dies die Hochdruck-Überhitzerheizflächen) sind unter diesen Umständen einer hohen thermischen Belastung ausgesetzt. Eine ausreichende Rohrkühlung dieser Heizflächen ist aber zur Gewährleistung eines sicheren Dauerbetriebs unerlässlich. Diese Rohrkühlung ist letztendlich über die im Verdampfer produzierte Dampfmenge sicherzustellen, wenn man den Einsatz weiterer Komponenten, wie beispielsweise zusätzliche Einspritzkühler, die für eine ausreichende Rohrkühlung der entsprechenden Heizflächen im Rauchgaskanal sorgen, vermeiden möchte. Da die Dampfproduktion im Verdampfer aber erst mit einer merklichen Zeitverzögerung nach Einschalten der Zusatzfeuerung zunimmt, ist der Überhitzer zumindest unmittelbar nach dem Zuschalten der Zusatzfeuerung bei etwa gleichen Rohrkühlungseigenschaften einer wesentlich größeren Beheizung mit allen daraus resultierenden Konsequenzen ausgesetzt.

Erfindungsgemäß ist daher vorgesehen, dass zum flexiblen Betrieb einer Kraftwerksanlage mit einem nach dem Zwangsdurchlaufprinzip arbeitenden Abhitzedampferzeugers, welcher im Rauchgaskanal angeordnete Heizflächen verschiedener Druckstufen des Abhitzedampferzeugers aufweist, zur Leistungserhöhung nahezu gleichzeitig mit dem Zuschalten einer im Rauchgaskanal des Abhitzedampferzeugers angeordneten Zusatzfeuerung, eine Erhöhung eines Speisewassermassenstroms, des die Heizflächen durchströmenden Speiswassers erfolgt.

Der Kerngedanke der vorliegenden Erfindung liegt dabei in der Ausnutzung des techno-physikalischen Vorteils von Zwangdurchlaufsystemen gegenüber Trommelsystemen. Erfindungsgemäß werden die Systemeigenschaften des Zwangdurchlaufsystems genutzt, die einem System mit Trommelverdampfern nicht zur Verfügung stehen. Diese Systemeigenschaft stellt für Kraftwerksanlagen, mit Abhitzedampferzeugern mit im Rauchgaskanal integrierter Zusatzfeuerung, einen wesentlichen Vorteil dar, da durch die Regelung des Speisewassers die Kühlung hoch beheizter Überhitzerheizflächen aktiv beeinflusst werden kann. Damit führt im Vergleich zu Trommelkesseln, das sowieso auf flexibel getrimmte Zwangdurchlaufsystem, durch die Zusatzfeuerung und die darauf abgestimmte gleichzeitige Speisewasserregelung zu einer noch höheren Anlagenflexibilität. Darüber hinaus wird durch die Anhebung des Dampfmassenstroms die für die Auslegung des Überhitzers relevante Maximaltemperatur abgesenkt. Damit wird zudem die Auslegung des stromab der Zusatzfeuerung angeordneten Überhitzers mit günstigeren Materialien ermöglicht.

Eine vorteilhafte Weiterbildung der vorliegenden Erfindung zielt in Richtung Eigenschutz des Verdampfers selbst. Durch eine aktive Absenkung des Überhitzungsgrundsollwerts am Verdampferaustritt beim Einschalten der Zusatzfeuerung werden auch die aus der Zusatzfeuerung resultierenden größeren Beheizungen der Verdampferrohre besser verkraftet. Auch hier resultiert die Erhöhung des Durchflusses durch den Verdampfer in einer besseren Rohrkühlung. Wie eine dazu besonders geeignete Regelung aussehen kann, ist der EP 2 194 320 A1 zu entnehmen.

Soll nach dem Zuschalten der Zusatzfeuerung die tatsächliche Überhitzung am Verdampferaustritt noch schneller reduziert werden, bzw. führt die erforderliche Erhöhung des Dampfmassenstroms nicht schnell genug zu einer verbesserten Kühlung insbesondere des Überhitzers, so kann ein zusätzliches Vorsteuersignal vorgesehen werden, dass die Erhöhung des Speisewassermassenstroms noch verstärkt. Vorzugsweise wird dazu die Leistungssteigerung der Zusatzfeuerung über ein DT1-Vorhalteglied ausgewertet und als zusätzlicher Faktor auf das Speisewassermengensignal aufgeschaltet. Dadurch, dass sich bedingt durch den Charakter eines solchen DT1-Vorhaltegliedes nur bei transienten Vorgängen der Zusatzfeuerung ein zusätzliches Signal ergibt, wird das mit der Speisewassermassenstromsignal bei deaktivierter Zusatzfeuerung bzw. bei konstanter Zusatzfeuerleistung nicht verändert.

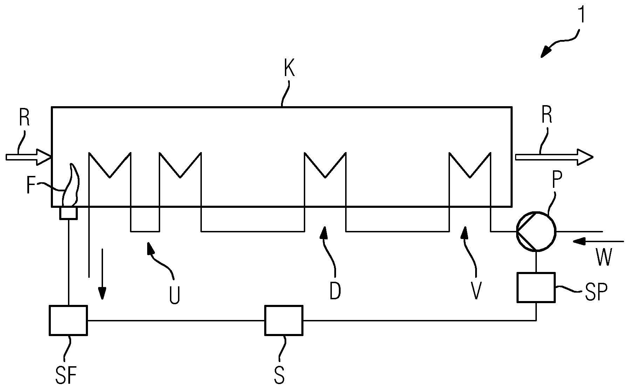

Die Erfindung soll nun anhand einer Figur beispielhaft erläutert werden. Der in der Figur sehr schematisch dargestellte Abhitzedampferzeuger 1 arbeitet nach dem Zwangsdurchlaufprinzip. Üblicherweise weist ein solcher Abhitzedampferzeuger eine oder mehrere Vorwärmerstufen V, ein oder mehrere Verdampferstufen D und ein oder mehrere Überhitzerstufen U auf. Die Heizflächen der einzelnen Stufen sind dabei in einem Rauchgaskanal K so angeordnet, dass das beispielsweise aus einer Gasturbine austretende heiße Rauchgas R zuerst die Heizflächen der Überhitzerstufen U, dann die der Verdampferstufen D und anschließend noch die der Vorwärmerstufen V umströmt. In jeder Stufe erfolgt dabei ein Wärmeübertrag vom Rauchgas R auf ein die Heizflächen durchströmendes Medium. Den Heizflächen der Vorwärmerstufe V sind strömungsmediumsseitig eine Speisewasserpumpe P vor- und die Heizflächen der Verdampferstufe D nachgeschaltet. Ausgangsseitig können die Heizflächen der Verdampferstufe D strömungsmediumsseitig über einen nicht näher dargestellten Wasserabscheider mit den nachgeschalteten Überhitzerheizflächen U verbunden sein, die ihrerseits zur Anpassung der Temperatur des die Überhitzerheizflächen verlassenden Dampfes mit Einspritzkühlern versehen sein können.

Der Abhitzedampferzeuger 1 ist hier für eine geregelte Beaufschlagung mit Speisewasser W ausgelegt. Dazu ist die Speisewasserpumpe P über eine Speisewassermengenregeleinrichtung SP so geregelt, dass durch eine geeignete Ansteuerung die von der Speisewasserpumpe P in Richtung des Vorwärmers V geförderte Speisewassermenge bzw. der Speisewassermassenstrom einstellbar ist. Wie eine solche Speisewassermengenregeleinrichtung SP aussehen kann, ist beispielsweise der EP 2 194 320 A1 zu entnehmen. Bei dem hier gezeigten Ausführungsbeispiel ist die Zusatzfeuerung F im Rauchgaskanal K im Bereich der Heizflächen der Überhitzer U bzw. auch möglicher Zwischenüberhitzerheizflächen vorgesehen. Die Zusatzfeuerung F wird über eine entsprechende Zusatzfeuerungsleistungsregeleinrichtung SF geregelt, insbesondere auch ein- und ausgeschaltet. Zur Durchführung des erfindungsgemäßen Verfahrens werden sowohl die Zusatzfeuerungsleistungsregeleinrichtung SF für die Zusatzfeuerung F als auch die Speisewassermengenregeleinrichtung SP für die Speisewasserpumpe P über eine Steuereinrichtung S, wie beispielsweise eine zentrale Leittechnik der Kraftwerksanlage, entsprechend angesteuert und überwacht.

Zwangdurchlaufsysteme haben gegenüber Umlaufverdampfern den entscheidenden Vorteil, dass das Strömungsmedium am Austritt des Verdampfers im Normalbetrieb bereits überhitzt ist. Wird nun entsprechend dem erfindungsgemäßen Verfahren bereits beim Einschalten der Zusatzfeuerung simultan der Speisewassermassenstrom erhöht, so mündet dies bei einem Zwangdurchlaufverdampfer unmittelbar in einer simultanen Steigerung des Dampfmassenstroms. Dies geschieht zu Lasten der Überhitzung, die durch diese Maßnahme reduziert wird. Mit steigendem Dampfmassenstrom werden gleichzeitig auch die Rohrkühleigenschaften im Überhitzer verbessert. Somit kann mit einem Zwangdurchlaufsystem bereits beim Einschalten der Zusatzfeuerung der Überhitzer mit steigenden Dampfmassenströmen besser gekühlt werden. Zu berücksichtigen ist, dass die Zunahme des Dampfmassenstroms durch Steigerung der Speisewassermenge theoretisch nur solange möglich ist, solange das Strömungsmedium am Verdampferaustritt noch nicht die Sättigungstemperatur erreicht hat. Ist dies der Fall, mündet jede weitere Vergrößerung des Speisewassermassenstroms in einer Erhöhung des Wasseranfalls in der Flasche. Da nach einer gewissen Zeitverzögerung die Mehrbeheizung der Zusatzfeuerung auch im Verdampfer spürbar wird, wird dem Erreichen der Sättigungstemperatur allerdings von dieser Seite entgegengewirkt.

Die Idee der vorliegenden Erfindungsmeldung zielt nun genau auf diesen techno-physikalischen Vorteil von Zwangdurchlaufsystemen. In der Regel wird die Zusatzfeuerung, aufgrund ihrer Eigenschaft, den Gesamtanlagenwirkungsgrad zu verschlechtern, nur dann eingeschaltet, wenn die Anlagenleistung bereits 100% erreicht hat, und noch zusätzliche Leistung zu hohen Vergütungskonditionen zur Verfügung gestellt werden soll. Systembedingt liegt bei 100% Anlagenlast die höchste Überhitzung am Verdampferaustritt von Abhitzedampferzeugern 1 mit BENSON Verdampfern vor. Diese liegt bei gängigen Auslegungen zwischen ca. 40K und 50K. Wird nun beim Einschalten der Zusatzfeuerung F simultan der Überhitzungsgrundsollwert des Verdampfers D in der Speisewassersollwertermittlung derartiger Zwangdurchlaufabhitzedampferzeuger innerhalb kürzester Zeit auf seinen Minimalwert reduziert (üblicherweise 10K) so erhöht sich aufgrund dieser Maßnahme die Speisewasserdurchflussmenge durch den Verdampfer. Die Speisewasserregelung versucht durch eine erhöhte Speisung den neuen Überhitzungssollwert einzustellen. Simultan erhöht sich auch der den Verdampfer verlassende Dampfmassenstrom, der in der durch die Zusatzfeuerung hoch belasteten Überhitzerstufe U für bessere Kühlungseigenschaften sorgt. Dadurch, dass sich die Überhitzung am Verdampferaustritt durch die nun größer gewordene Speisewassermenge reduziert hat, wird der Kühleffekt im Überhitzer sogar noch verstärkt. Da mit einem minimalen Überhitzungsgrundsollwert von 10K ein ausreichender Abstand zur Siedelinie eingehalten wird, ist auch bei geringfügigen Unterschwingern der tatsächlichen Überhitzung am Verdampferaustritt nicht mit einem Wasseranfall im Wasserabscheider zu rechnen. Dies wird noch dadurch unterstützt, dass durch die steigende Beheizung des Verdampfers durch das Zusatzfeuer F die tatsächliche Überhitzung am Verdampferaustritt geneigt ist, wieder anzusteigen.

## Patentansprüche

1. Verfahren zum flexiblen Betrieb einer Kraftwerksanlage mit einem nach dem Zwangsdurchlaufprinzip arbeitenden Abhitzedampferzeuger (1), welcher im Rauchgaskanal (K) angeordnete Heizflächen verschiedener Stufen (V,D,U) des Abhitzedampferzeugers (1) aufweist,
**dadurch gekennzeichnet, dass**
zur Leistungserhöhung nahezu gleichzeitig mit dem Zuschalten einer im Rauchgaskanal (K) des Abhitzedampferzeugers (1) angeordneten Zusatzfeuerung (F) eine Erhöhung eines Speisewassermassestroms, des die Heizflächen durchströmenden Speiswassers (W) erfolgt.

2. Verfahren nach Anspruch 1,
**dadurch gekennzeichnet, dass**
die Erhöhung des Speisewassermassenstroms durch eine Reduzierung des Überhitzungsgrundsollwerts am Austritt einer Verdampferstufe (V) des Abhitzedampferzeugers erreicht wird.

3. Verfahren nach Anspruch 1 oder 2,
dadurchgekennzeichnet,dass
zudem eine Leistungsveränderung der Zusatzfeuerung (F) ausgewertet und als Korrekturfaktor der Erhöhung des Speisewassermassenstroms beaufschlagt wird.

## Claims

1. Method for the flexible operation of a power plant with a waste heat steam generator (1) which works according to the once-through principle and has heating surfaces of various stages (V, D, U) of the waste heat steam generator (1) arranged in the flue gas duct (K),
**characterized in that**
in order to increase power at approximately the same time as an additional firing (F), arranged in the flue gas duct (K) of the waste heat steam generator (1), is brought on-line, a feed water mass flow rate of the feed water (W) flowing through the heating surfaces is increased.

2. Method according to Claim 1,
**characterized in that**
the feed water mass flow rate is increased by reducing the superheating baseline setpoint value at the outlet of an evaporator stage (V) of the waste heat steam generator.

3. Method according to Claim 1 or 2,
**characterized in that**
in addition a change in power of the additional firing (F) is evaluated and is acted upon as a correction factor for the increase in the feed water mass flow rate.

## Revendications

1. Procédé de fonctionnement souple d'une centrale électrique, comprenant un générateur (1) de vapeur à récupération de la chaleur perdue, fonctionnant suivant le principe de la circulation forcée, qui a des surfaces de chauffe, montées dans le conduit (K) pour le gaz de fumée, de divers étages (V, D, U) du générateur (1) de vapeur à récupération de la chaleur perdue,
**caractérisé en ce que**
pour augmenter la puissance, on effectue, presque simultanément à la mise en circuit d'un foyer (F) supplémentaire monté dans le conduit (K) de gaz de fumée du générateur (1) de vapeur à récupération de la chaleur perdue, une augmentation du courant massique de l'eau d'alimentation, qui passe dans les surfaces de chauffe.

2. Procédé suivant la revendication 1,
**caractérisé en ce que**
on obtient l'augmentation du courant massique d'eau d'alimentation par une réduction de la valeur de consigne de base de la surchauffe à la sortie d'un étage (V) d'évaporateur du générateur de vapeur à récupération de la chaleur perdue.

3. Procédé suivant la revendication 1 ou 2,
**caractérisé en ce que**
on exploite, en outre, une variation de puissance du foyer (F) supplémentaire et on l'utilise comme facteur de correction pour augmenter le courant massique de l'eau d'alimentation.
